Europäisches Patentamt

(19) European Patent Office

Office européen des brevets

(11) Veröffentlichungsnummer: **0 036 523**
**B1**

(12) **EUROPÄISCHE PATENTSCHRIFT**

(45) Veröffentlichungstag der Patentschrift:
24.10.84

(51) Int. Cl.³: **C 09 B 67/10**

(21) Anmeldenummer: **81101541.1**

(22) Anmeldetag: **04.03.81**

(54) Verfahren zur Formierung von feinteiligen organischen Rohpigmenten.

(30) Priorität: **13.03.80 DE 3009602**

(43) Veröffentlichungstag der Anmeldung:
**30.09.81 Patentblatt 81/39**

(45) Bekanntmachung des Hinweises auf die Patenterteilung:
**24.10.84 Patentblatt 84/43**

(84) Benannte Vertragsstaaten:
**CH DE FR GB IT LI**

(56) Entgegenhaltungen:
**DE - A - 2 341 795**
**DE - B - 1 225 598**
**DE - B - 1 261 106**
**GB - A - 1 062 256**
**US - A - 2 857 400**
**US - A - 4 145 182**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Graser, Fritz, Dr., Blieskasteler Strasse 17,
D-6700 Ludwigshafen (DE)**
Erfinder: **Wickenhaeuser, Gerhard, Dr., Roemerweg 8,
D-6701 Birkenheide (DE)**

## Beschreibung

Die Erfindung betrifft ein Verfahren zur Formierung von agglomerierten feinteiligen Rohpigmenten.

Die Pigmente fallen bei der Synthese meist in groben Kristallen an, die für eine Pigmentanwendung nicht geeignet sind. Man muss diese groben Kristalle – im folgenden auch als Rohpigment bezeichnet – zunächst zerkleinern und dann in geeignete Kristallformen und -grössen überführen. Das Zerkleinern geschieht in den meisten Fällen durch intensives Mahlen der Rohpigmente mit oder ohne Mahlhilfsmittel in geeigneten Mühlen, z.B. in Kugelmühlen. Hierbei entstehen Pigmentpulver, die aus 2 bis 200 μm grossen Agglomeraten bestehen, die ihrerseits aus Primärteilchen von $\leq 0,2$ μm aufgebaut sind. Trotz der Feinheit der Primärteilchen sind diese agglomerierten Pigmentpulver in der Regel noch nicht für eine coloristische Anwendung geeignet, sondern müssen erst durch eine Rekristallisation – auch als Formierung bezeichnet – in für die Anwendung optimale Teilchen überführt werden. Die primäre Zerkleinerung der groben Rohkristalle kann auch z.B. durch Lösen in konzentrierter Schwefelsäure und Ausfällen auf Wasser geschehen. Der so erhaltene feinteilige Teig wird dann als solcher oder nach dem Trocknen durch eine Formierung in eine für die Pigmentanwendung geeignete Form übergeführt. Diese Formierung wird z.B. durch Behandlung der sehr feinen Pigmentteilchen mit einem Gemisch aus Wasser und organischen Lösungsmitteln, z.B. Alkoholen, wie Isobutanol oder mit Aminen wie $C_2$- bis $C_8$-Aminen oder mit aromatischen Kohlenwasserstoffen wie Xylol durchgeführt. Nach der Formierung müssen aus Kostengründen und aus ökologischen Gründen die verwendeten Flüssigkeiten wieder zurückgewonnen werden. Dies erfolgt meistens durch Destillation und/oder z.B. durch eine Trennung von Flüssigkeit und Wasser.

Nach dem in der US-A 2 857 400 beschriebenen Verfahren werden trocken gemahlene Rohpigmente unter starkem Rühren in einer organischen Flüssigkeit rekristallisiert. Nach den Angaben in Spalte 2, Zeilen 65/68 erfolgt das «starke Rühren» durch Mahlen in einer Kugelmühle, durch Passieren der Suspension durch einen Homogenisierer oder durch Mahlen in einer Kolloidmühle, wodurch bei diesem Verfahren bei der Rekristallisation starke Scherkräfte auf die Teilchen ausgeübt werden.

Für dieses Verfahren kommen die verschiedensten organischen Flüssigkeiten in Betracht, u.a. auch Kohlenwasserstoffe und durch Halogen substituierte Kohlenwasserstoffe (Spalte 7, Zeilen 4/17).

Aus der US-A 4 145 182 ist ein Finishverfahren für Dispersionsfarbstoffe bekannt, bei dem die feinteiligen Dispersionsfarbstoffe in Wasser, einem Wasser enthaltenden oder einem wasserfreien Medium bei 50 bis 180°C gegebenenfalls unter Rühren kristallisiert werden. Da Dispersionsfarbstoffe im Vergleich zu Pigmenten eine wesentlich höhere Löslichkeit sowohl in Wasser als auch in organischen Lösungsmitteln haben, können die bei Dispersionsfarbstoffen gewonnenen Erkenntnisse nicht auf den Finish von Rohpigmenten übertragen werden. In Spalte 2, Zeile 19 ff der USA-A ist zwar angegeben, dass vorzugsweise Kohlenwasserstoffe, insbesondere aliphatische Kohlenwasserstoffe aber ebenso cycloaliphatische oder aromatische Kohlenwasserstoffe, die vollständig oder teilweise halogeniert sein können, geeignet sind. Beispielhaft werden nur Tetrachlormethan, Perchlorethylen, Chlorbenzol, Dichlorbenzol, Toluol und Xylol genannt. In den Ausführungsbeispielen werden neben Wasser und Dimethylformamid/Wasser nur Perchlorethylen und Chlorbenzol genannt. Die nach Spalte 2, Zeile 19 besonders bevorzugten aliphatischen Kohlenwasserstoffe sind gar nicht durch Beispiele belegt worden.

Es bestand nun die Aufgabe, ein Verfahren zur Rekristallisation (Formierung) von feinteiligen, agglomerierten Rohpigmenten zu finden, bei dem eine einfache Trennung der behandelten Pigmentteilchen vom Behandlungsmittel möglich ist, bei dem das Behandlungsmittel wieder gut zu isolieren ist, bei dem keine ökologischen Probleme auftreten und bei dem kostengünstige Formierungsmittel verwendet werden. Ausserdem sollen die als Verfahrensprodukte erhaltenen Pigmentformen gute Pigmenteigenschaften aufweisen.

Es wurde nun gefunden, dass man agglomerierte, feinteilige, organische Rohpigmente, deren 2 bis 200 μm grossen Agglomerate aus Primärteilchen von $\leq 0,2$ μm bestehen, durch Rekristallisation in organischen Flüssigkeiten in der Wärme formieren kann, wenn man als organische Flüssigkeiten $C_3$- bis $C_5$-Alkane, $C_3$- bis $C_5$-Alkene, Methylchlorid, Ethylchlorid oder Propylchlorid verwendet und wobei die Kristallisation in der organischen Flüssigkeit im kritischen oder überkritischen Zustand der Flüssigkeit zwischen 40 und 250°C unter Druck erfolgt.

Nach dem erfindungsgemässen Verfahren erhält man Pigmentformen, die in Lacken, Druckfarben oder Kunststoffen farbstarke und brillante Färbungen mit ausgezeichneten Echtheiten liefern.

Das erfindungsgemässe Verfahren hat gegenüber den Verfahren des Standes der Technik folgende Vorteile: die zur Rekristallisation verwendeten Flüssigkeiten sind leicht und vollständig zu entfernen und ausserdem sehr preisgünstig. Die Dichte der Flüssigkeit oder des Mediums kann im überkritischen Bereich, d.h. bei Temperaturen oberhalb der kritischen Temperatur und bei Drücken um bis oberhalb des kritischen Drucks der verwendeten Flüssigkeit, durch Anwendung entsprechender Drücke in weiten Grenzen variiert werden. Damit können optimale Bedingungen für die Rekristallisation (Formierung) eingestellt werden. Ausserdem treten bei den erfindungsgemäss zu verwendenden organischen Flüssigkeiten praktisch kaum ökologische Probleme auf.

Als $C_3$- bis $C_5$-Alkane und $C_3$- bis $C_5$-Alkene sind z.B. im einzelnen zu nennen: Propan, n-Butan, n-Pentan, 2-Methylpropan, 2-Methylbutan, 2,2-Dimethylpropan, Propylen, Buten-1, Buten-2, Isobutylen, 2-Methylbuten, Penten-1 und 2,2-Dimethylpropylen. Daneben kommen als organische Flüssigkeiten noch Ethylchlorid, Propylchlorid und Methylchlorid in Betracht.

Für das erfindungsgemässe Verfahren kommen als organische Rohpigmente z.B. solche in Betracht, die sich vom Phthalocyanin, vom Anthrachinon, vom Perylentetracarbonsäurediimid, vom Chinophthalon, vom Indanthron, vom Pyranthron, vom Flavanthron, vom Violanthron, vom Isoviolanthron, vom Chinacridon, vom Thioindigo und vom Indigo ableiten. Ferner sind auch Rohpigmente der Oxazin-, der Isoindolin- und der Azoreihe geeignet.

Das erfindungsgemässe Verfahren wird im allgemeinen so durchgeführt, dass man das feinteilige, agglomerierte Rohpigment, dessen Primärteilchen eine Grösse von $\leqq 0{,}2\ \mu m$ aufweisen, vorzugsweise in trockener bzw. in getrockneter Form in der organischen Flüssigkeit suspendiert, die Flüssigkeit durch Erwärmen auf Temperaturen zwischen 40 und 250°C, vorzugsweise zwischen 50 und 200°C unter Druck in den kritischen oder überkritischen Zustand bringt und so lange bei der gewünschten Temperatur hält, bis eine optimale Rekristallisation erfolgt ist. Hierzu sind je nach dem Pigment, der Flüssigkeit und der Temperatur im allgemeinen zwischen 0,2 und 10 Stunden erforderlich. Zweckmässigerweise wird man dabei in einem Dichtebereich arbeiten, der über der kritischen Dichte liegt. Wenn das Pigment in der gewünschten Pigmentform vorliegt, wird die Flüssigkeit destillativ abgetrennt und zur Wiederverwendung aufgefangen. Man kann auch das Formierungsgemisch mit einem inerten Gas, z.B. Stickstoff, durch ein Ventil drücken und das Pigment nach der Art der Sprühtrocknung isolieren. Gegebenen- und gewünschtenfalls kann man die Flüssigkeit auch durch Filtration vom Pigment abtrennen. Erforderlichenfalls werden noch anhaftende Spuren der Flüssigkeit durch Anlegen eines schwachen Vakuums entfernt. Bei der Isolierung fällt das Pigment als Trockengut an und kann entweder direkt oder nach dem Mahlen in Form eines Pulvers verwendet werden.

Bei der Auswahl der zu verwendenden Flüssigkeiten ist darauf zu achten, dass diese nicht mit den zu rekristallisierenden Pigmenten reagieren. So wird man z.B. bei Pigmenten mit Aminogruppen, die mit Halogenalkylen reagieren können, die Alkane oder Alkene verwenden, die unter den angewandten Bedingungen keine chemische Reaktion eingehen.

Die folgenden Beispiele sollen das Verfahren zusätzlich erläutern. Die im folgenden angegebenen Teile und Prozentangaben beziehen sich auf das Gewicht.

Beispiel 1

a) 40 Teile feingemahlenes Kupferphthalocyanin, erhalten gemäss Beispiel 1b), werden in einem Rührdruckgefäss in 200 Teilen Propan bei 100°C und etwa 70 bar 4 Stunden gerührt. Anschliessend gast man unter Abkühlung auf Raumtemperatur ab. Man erhält in quantitativer Ausbeute ein feinteiliges Kupferphthalocyanin der $\beta$-Modifikation, das sehr farbstarke Einbrennlackierungen in brillanten Tönen liefert.

b) Rohes Kupferphthalocyanin wurde in einer Kugelmühle 30 Stunden in Abwesenheit von Mahlhilfsmitteln gemahlen. Das Mahlgut besteht aus 2 bis 200 μm grossen Agglomeraten, die aus Primärteilchen von $\leqq 0{,}1\ \mu m$ aufgebaut sind.

Beispiel 2

a) 20 Teile fein gemahlenes Flavanthron, das nach den Angaben unter b) erhalten wurde, werden in einem verschlossenen Rührdruckgefäss in 200 Teilen n-Butan unter Rühren auf 190°C erwärmt, wobei sich ein Druck von 70 bar aufbaut und hält 6 Stunden bei dieser Temperatur. Unter Abkühlenlassen wird anschliessend das Butan abgegast, am Ende unter schwach vermindertem Druck. Man erhält in quantitativer Ausbeute ein feinteiliges Flavanthronpigment, das mit guter Farbstärke reine gelbe Lackausfärbungen mit gutem Deckvermögen ergibt.

b) Rohes Flavanthron wird in einer Planetenkugelmühle in Abwesenheit von Mahlhilfsmitteln 7 Stunden lang gemahlen. Das Mahlgut besteht aus 2 bis 10 μm grossen Agglomeraten, die aus Primärteilchen von $\leqq 0{,}1\ \mu m$ aufgebaut sind.

Beispiel 3

a) 20 Teile feingemahlenes Indanthron, das nach den Angaben unter b) erhalten worden ist, werden in 200 Teilen n-Pentan in einem Rührdruckgefäss auf 185°C erhitzt und 6 Stunden bei dieser Temperatur gehalten. Der Druck beträgt etwa 50 bar. Man lässt unter Abkühlung auf 30°C, am Ende unter Anlegung eines verminderten Drucks das n-Pentan abdestillieren und erhält als Rückstand mit quantitativer Ausbeute ein feinteiliges Indanthronpigment, das farbstarke, reine, blaue Einbrennlackierungen ergibt.

b) Rohes Indanthron wird in einer Kugelmühle während 30 Stunden in Abwesenheit von Mahlhilfsmitteln gemahlen. Man erhält ein Mahlgut, dessen 2 bis 10 μm grosse Agglomerate aus Primärteilchen von $\leqq 0{,}2\ \mu m$ aufgebaut sind.

Beispiel 4

70 Teile feingemahlenes Kupferphthalocyanin [hergestellt nach Beispiel 1b)] wird in einem Rührdruckbehälter (1200 Volumenteile) bei 20°C mit 420 Teilen flüssigem Methylchlorid (ca. 9 bar) gemischt, dann innerhalb von etwa 15 Minuten auf 150°C erhitzt, wobei sich ein Druck von 78 bar einstellt und rührt 30 Minuten bei 150 bis 155°C. Nach dem Abkühlen auf 80°C wird die Suspension mit Stickstoff langsam durch ein Drosselventil gedrückt und dabei entspannt. Das Methylchlorid entweicht dabei als Gas und wird durch ein Filter vom Kupferphthalocyanin abgetrennt. Man erhält in ausgezeichneter Ausbeute ein sehr feinteiliges Kupferphthalocyaninpigment, das brillante farbstarke Färbungen liefert und sehr gut dispergierbar ist.

Beispiel 5

70 Teile feingemahlenes Kupferphthalocyanin [hergestellt nach Beispiel 1b)] werden in einem Rührdruckgefäss von 1200 Volumenteilen bei 20°C mit 420 Teilen flüssigem Propan (22 bar) gemischt, das Gemisch dann innerhalb von 15 Minuten auf 120°C erhitzt, wobei sich ein Druck von etwa 90 bar einstellt, und 4 Stunden bei 120°C gerührt. Anschliessend kühlt man auf 80°C und gast dann unter weiterer Abkühlung auf Raumtemperatur das Propan ab. Man erhält in quantitativer Ausbeute ein feinteiliges Kupferphthalocyaninpigment der β-Modifikation, das farbstarke Einbrennlackierungen in brillanten Tönen liefert.

Patentansprüche

1. Verfahren zur Formierung von agglomerierten feinteiligen organischen Rohpigmenten, deren 2 bis 200 µm grosse Agglomerate aus Primärteilchen von ≤0,2 µm bestehen, durch Rekristallisation in organischen Flüssigkeiten in der Wärme, dadurch gekennzeichnet, dass man als organische Flüssigkeiten $C_3$- bis $C_5$-Alkane, $C_3$- bis $C_5$-Alkene, Methylchlorid, Ethylchlorid oder Propylchlorid verwendet und wobei die Kristallisation in der organischen Flüssigkeit im kritischen oder überkritischen Zustand der Flüssigkeit zwischen 40 und 250°C unter Druck erfolgt.

2. Verfahren nach Anspruch 1, dadurch gekennzeichnet, dass die Kristallisation bei Temperaturen zwischen 50 und 200°C erfolgt.

**Claims**

1. A process for conditioning agglomerated finely divided organic crude pigments, whose 1–200 µm agglomeraters consist of primary particles of $\leq 0.2$ µm, by recrystallization in hot organic liquids, wherein the organic liquid used is a $C_3$–$C_5$-alkane, a $C_3$–$C_5$-alkene, methyl chloride, ethyl chloride or propyl chloride, and the crystallization is carried out in the organic liquid with the latter in the critical or supercritical state, at from 40 to 250°C under superatmospheric pressure.

2. A process as claimed in claim 1, wherein the crystallization is carried out at from 50–200°C.

**Revendications**

1. Procédé pour la mise en forme de pigments organiques bruts en fines particules agglomérées, dont les agglomérats de 2 à 200 microns de grosseur se composent de particules primaires inférieures ou égales à 0,2 micron, par recristallisation à la chaleur dans des liquides organiques, caractérisé en ce qu'on utilise, en tant que liquides organiques, des alcanes en $C_3$ à $C_5$, des alcènes en $C_3$ – $C_5$, le chlorure de méthyle, le chlorure d'éthyle ou le chlorure de propyle, la cristallisation dans le liquide organique étant effectué à l'état critique ou surcritique du liquide, entre 40 et 250°C sous pression.

2. Procédé selon la revendication 1, caractérisé en ce que la cristallisation est effectuée à une température comprise entre 50 et 200°C.